# EUROPEAN PATENT SPECIFICATION

(11) **EP 1 207 775 B1**
(45) Date of publication and mention of the grant of the patent: **10.12.2003**
(21) Application number: 00956737.1
(22) Date of filing: 01.09.2000
(51) Int. Cl.: A47J 31/18, A47J 31/30

(54) **APPARATUS FOR PREPARING MEDICINAL HERBAL AND ROOTS INFUSIONS AND THE LIKE**
GERÄT ZUM ZUBEREITEN VON MEDIZINISCHEN KRÄUTERINFUSIONEN ODER DERGLEICHEN
APPAREIL POUR LA PREPARATION D'INFUSIONS A BASE D'HERBES ET DE RACINES MEDICINALES, ET SIMILAIRE

(30) Priority: 01.09.1999 IT MI990534 U
(43) Date of publication of application: 29.05.2002
(73) Proprietor: Erif S.r.l., 38015 Lavis (TN) (IT)
(72) Inventor: DEGASPERI, Rolando, I-38015 Lavis (IT)
(74) Representative: Lecce, Giovanni
(86) International application number: IB0001229
(87) International publication number: WO01015580

(56) References cited:
- EP-A- 0 339 440
- DE-A- 3 843 140
- US-A- 3 132 580

## Description

### TECHNICAL FIELD

The present invention relates to an apparatus for preparing infusions of various kinds of medicinal herbs and roots and tisanes in general, usable both in a domestic and in public environments.

### BACKGROUND ART

Other systems based essentially on a container which acts as a filter in which the herbs are placed are commercially available. The filter, immersed in water brought to a boil, produces the infusion. The system operates at atmospheric pressure and at the temperature of boiling water.

Italian Patent No. 01265757 discloses an infusion apparatus which is structured so as to require no use of filters and gaskets, operates on an principle which can be described as "thermal hydropressure", has a much simpler structure than conventional infusion apparatuses, is easy to use and highly reliable.

DE-A- 3843140 discloses an apparatus for preparing infusions of medicinal herbs and roots having the features of the preamble of claim 1. The disclosed apparatus is provided with filters and gaskets and the infusions are prepared by decantation carried out in the upper body of the inner container.

### DISCLOSURE OF THE INVENTION

The aim of the present invention is to provide an apparatus for preparing infusions of various medicinal herbs and roots, substantially tisanes of various kinds, which is conceived and structured so as to obviate the drawbacks and limitations of conventional infusion apparatuses, and especially such as to provide the process of complete infusion by means of a series of successive infusion cycles, all performed at a temperature of the liquid which approaches but never reaches the boiling point, thus allowing the herbs, roots and the like subjected to infusion to manifest their properties to the maximum extent.

Another object of the invention is to provide an infusion apparatus which is easy to use and to clean after each operation and is highly competitive in cost with respect to conventional infusion apparatuses.

This aim, this object and others which will become better apparent hereinafter are achieved by an apparatus for preparing infusions of medicinal herbs and roots and tisanes in general, comprising:
- an outer main container which is cylindrical, has a mouth, a closed bottom and a non-stick radiating base, to be placed on a direct heat source;
- a cylindrical inner container, constituted by two cylindrical, lower and upper bodies in which the bottoms are mutually opposite and are firmly anchored so as to constitute a single cylindrical body with a central partition and having such dimensions so as to allow its insertion in said outer main container with a cylindrical interspace of preset dimension to provide a liquid venting by rising;
- a closure lid, having an underlying face, which can be inserted in the mouth of said outer main container and can be locked thereon;
- at least one spring made of spring steel or the like, which is anchored parallel to the underlying face of said lid at a distance from said face which allows a protrusion which protrudes from said face to remain in contact with said spring, when said lid is open, and allows, when the lid is dosed, said spring to apply a pressure to the inner container so as to assuredly seal the lower mouth of said inner container against the bottom of the main container, so that when the main container is placed, after closing the lid, on a heat source, the liquid in the lower body of the inner container is allowed to generate a pressure which can produce a small yielding of said spring, allowing to escape, from the mouth of the lower body of said inner container, part of the liquid contained therein and its rise through said cylindrical interspace; wherein, according to the present invention, the inner cylindrical container is composed of two separate bodies, which are stably anchored to each other by their dosed bottoms; the medicinal herbs or roots and water are introduced into the lower body of the inner container, and the liquid, escaping from the mouth of the lower body of the inner container, rises through the cylindrical interspace until it pours into the upper part of the upper body.
Particular embodiments of the apparatus of the present invention are set forth in subclaims 2 to 11.
More particularly, a grip knob is anchored in the partition constituted by the mutually opposite bottoms of the two inner containers, which are interconnected and form a single inner container; said knob can be used to support and handle the inner container during insertion of the water and herbs in the lower part of said single container and then, after inserting the inner container in the outer container by overturning, to keep the inner container pressed against the bottom of the outer main one until the lid is closed.

Moreover, said base made of non-stick radiating material is anchored to the closed bottom of the outer metallic container by means of a cap or insert made of steel which can be inserted at the center of said base and anchored to the bottom of the steel container by means of spot welds or the like.

Likewise, said grip knob is preferably made of silver-plated brass and is provided with means for the stable anchoring of the two inner containers with mutually opposite bottoms without welding them.

### BRIEF DESCRIPTION OF THE DRAWINGS

Further characteristics and advantages of the present invention will become better apparent from the following detailed description, which is given with reference to the accompanying drawings, provided only by way of non-limitative example and wherein:
Figure 1 is a schematic sectional view, taken along an axial diametrical plane, of the outer cylindrical container with the corresponding lid, which is part of the infusion apparatus provided according to the invention;
Figure 2 is a likewise sectional view of two cylindrical metallic containers which are mutually opposite and have bottoms which are mutually joined so as to form a single container to be inserted in the outer container of Figure 1;
Figure 3 is a plan view of the lid for closing said main container;
Figure 4 is a diametrical sectional view of said lid, taken along the line IV-IV of Figure 3;
Figure 5 is a partially sectional view, taken along an axial plane, of the complete infusion apparatus executed according to the invention, in the closed configuration;
Figure 6 is a view of an example of a grip handle which protrudes from said lid; and
Figure 7 is a view of a leaf spring made of spring steel which can be attached to said grip handle.

### WAYS OF CARRYING OUT THE INVENTION

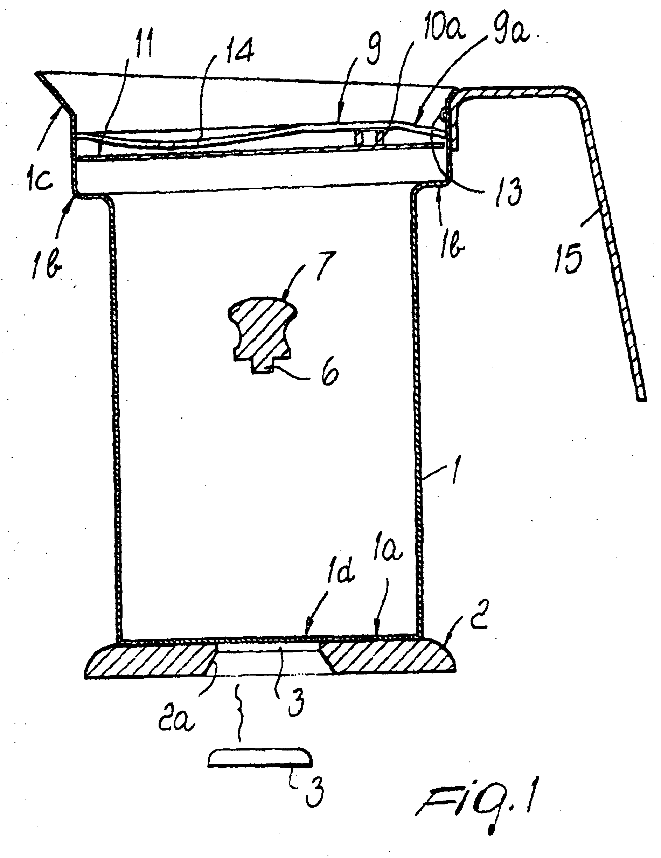

With reference to the above figures, the infusion apparatus according to the present invention is constituted by an outer main cylindrical container, generally designated by the reference numeral 1 in Figure 1, which is made of stainless steel or the like, with a lower flat bottom 1a and has, in an upward region, a flared portion 1b and a pouring spout 1c. A base 2, made of non-stick and radiating material, substantially aluminum or the like, is anchored to the bottom 1a of said outer container 1 and is meant to be placed on a heat source.

The anchoring of the radiating base 2 to the bottom 1a of the main container 1 is performed by inserting, with slight forcing, in a flared opening 2a of the base 2, a cap 3 (Figure 1) or insert made of stainless steel and by then welding said cap, by means of spot welds, to the central region 1d of the bottom 1a, also made of steel, of the outer container.

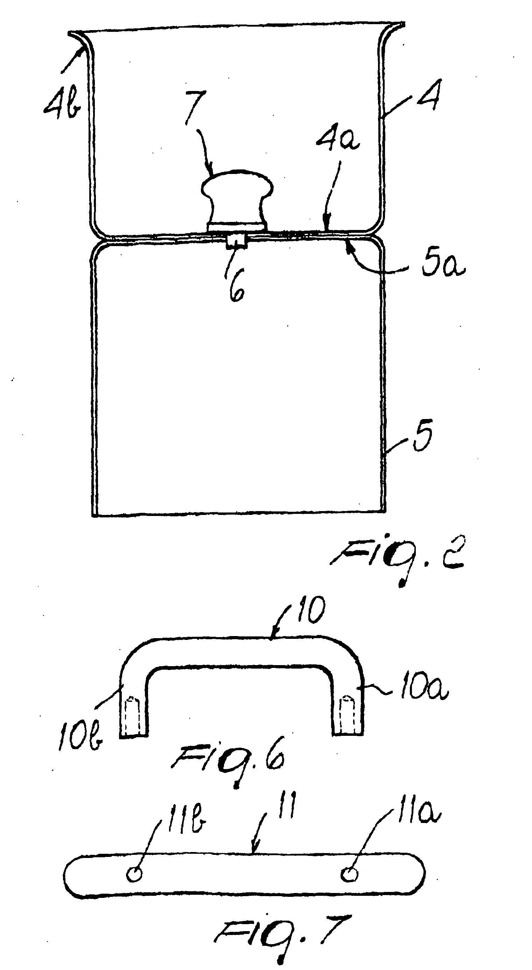

Two cylindrical containment bodies are inserted in said main container 1, are also made of steel, are designated by the reference numerals 4 and 5 (Figures 2 and 5), have the same volume, and are arranged in a coaxially mutually opposite configuration so that their respective flat bottoms 4a and 5a are in contact and are then stably mutually anchored by welding or also by means of the threaded stem 6 of a handling knob 7 whose use will be explained hereinafter. Said two containers 4 and 5 thus form a single cylindrical body with a central partition.

The diameter and height of the cylindrical bodies 4 and 5 are such as to allow the single cylindrical body constituted thereby to be inserted in the outer main container 1 with the tolerance, substantially a cylindrical interspace 8 (Figure 5), which allows correct operation of the apparatus, as clarified hereinafter. The mouth of the upper part 4 of said single cylindrical body is provided outwardly, as designated by 4h in Figure 2, so as to be accommodated inside the flared portion 1b provided at the upper end of the main container 1.

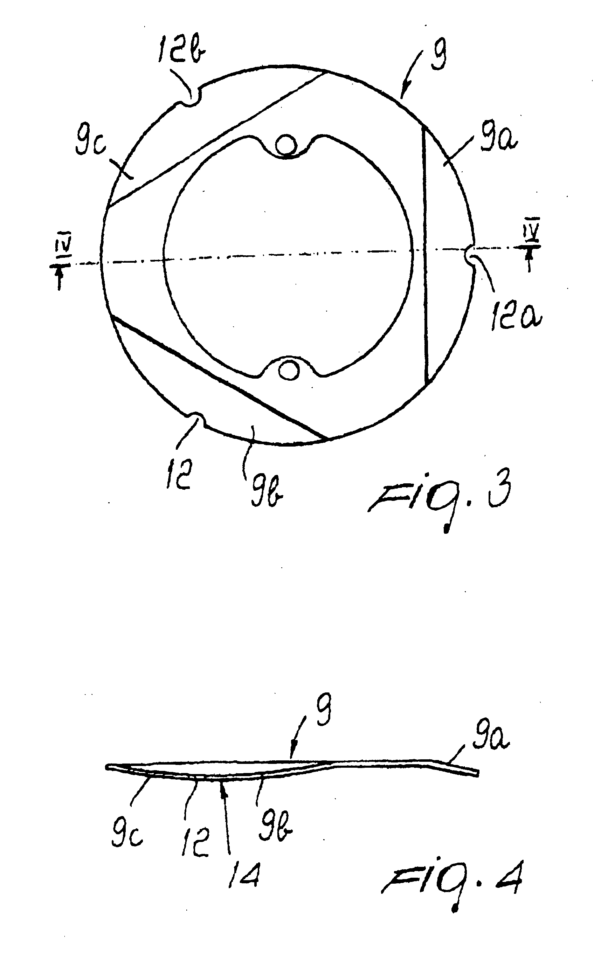

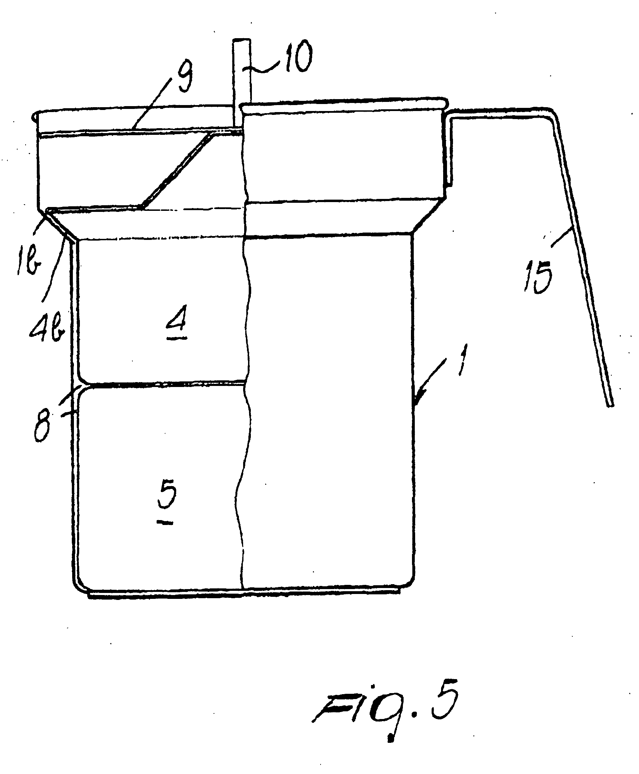

In order to close the apparatus, there is provided a substantially disk-like lid, generally designated by the reference numeral 9 in Figures 1-3-4, which can be locked within the flared portion 1b of the outer container 1 by means of a bayonet or screw coupling. More particularly, the lid 9 is constituted by a plate-like body which is shaped so as to have three wings at 120^{e} which are folded downward and are designated by the reference numerals 9a-9b-9c in Figures 3 and 4; the part of the lid that lies between said wings 9b and 9c is furthermore curved downward so as to constitute a protrusion which protrudes from the plane of the plate-like body 9. Moreover, a grip handle 10 (Figure 6) is anchored to the lid 9 and its stems 10a-10b (Figure 6) pass through said lid in order to support a leaf spring 11 made of spring steel (Figure 7). Said spring has two pins 11a-11b which can be stably inserted in corresponding cavities formed in said stems of the handle 10. Moreover, three recesses 12-12a-12b are formed peripherally with respect to the disk-like body that constitutes the lid 9, are arranged at 120° to each other, and are suitable to be arranged at teeth 13 which protrude inside the cylindrical flared portion 1b of the outer container 1, in order to correctly position the lid before it is locked inside the flared portion 1b (Figure 1).

Once closure has been performed, said leaf spring 11 is pressed against the curved edge 4b of the internal cylindrical container by means of the curved part 14 that lies between the wings 9b-9c, and accordingly applies pressure to said inner container, sealing the lower mouth of said inner container against the bottom 1a of the outer container 1.

Finally, the infusion apparatus thus provided has a suitable handle 15 for handling it.

Therefore, in order to provide the infusion of medicinal herbs and/or roots or the like, the single inner container 4-5 is extracted from the outer container 1 by gripping the knob 7 and inverting said container; then the herbs and liquid are introduced in the part 5 of the inverted outer container and then the inverted outer container is fitted over the inner one, keeping said inner container motionless in the inverted position; then, while keeping the grip knob always pushed toward the bottom of the outer container, the two containers are overturned, immediately closing the lid, whose leaf spring thus keeps the month of the body 5 sealed against the bottom of the outer container 1.

The operating principle termed "thermal hydropressure" is based on the fact that a liquid placed in the lower part of the inner container, which is in turn inserted by overturning in the main container and locked by means of the bayonet closure system and subjected to a heat source, generates a pressure which produces a minute yielding of the retention spring, allowing the escape only of the liquid fraction that is contained and preventing the escape of the solid parts (herbs in infusion).

Accordingly, optimum filtering is in practice achieved without the aid of any filter or gasket.

The escaped liquid can vent only by rising along the interspace 8 between the outer container 1 and the inner container (4-5), pouring into the upper part of said container.

The resulting pressure drop allows to restore the seal, the consequent optimum internal temperature and the corresponding pressure, producing a new cycle. The series of cycles ends when all the liquid contained in the lower part is transferred to the upper part.

A sound (gurgling) produced by the air that replaces the liquid at the end of the operation indicates the end of the procedure for preparing the infusion.

An important characteristic of the above-described method is constituted by the fact that the temperature of the liquid contained in the apparatus never reaches the boiling point. The internal pressure further produces a "pressing" effect which, combined with the optimum infusion temperature (which is close to the boiling point but never reaches it) allows the herbs in infusion to express their properties to the maximum possible extent.

After the operation has been completed, it is sufficient to release the closure lid and clean the apparatus with nothing more than running water.

It is evident that structurally and functionally equivalent modifications and variations may be applied to the infusion apparatus according to the present invention in its practical execution without abandoning the scope of the protection of said invention.

Thus, for example, the materials used may vary according to requirements and may be constituted by any material capable of withstanding a direct heat source up to a temperature of the internal liquid of approximately 80°C; moreover, the dimensions and the geometric shape of the apparatus may vary according to requirements; for example, the two outer and inner containers, instead of being cylindrical, may have different shapes, such as hexagonal, octagonal, square or the like, and may have volumetric capacities which can vary according to requirements and at will.

## Claims

1. An apparatus for preparing infusions of medicinal herbs and roots and tisanes in general, comprising:
- an outer main container (1) which is cylindrical, has a mouth, a closed bottom (1a) and a non-stick radiating base (2), to be placed on a direct heat source;
- a cylindrical inner container, constituted by two cylindrical, lower (5) and upper (4), bodies in which the bottoms (4a, 5a) are mutually opposite and are firmly anchored so as to constitute a single cylindrical body with a central partition and having such dimensions so as to allow its insertion in said outer main container (1) with a cylindrical interspace (8) of preset dimension to provide a liquid venting by rising;
- a closure lid (9), having an underlying face, which can be inserted in the mouth of said outer main container (1) and can be locked thereon;
- at least one spring (11) made of spring steel or the like, which is anchored parallel to the underlying face of said lid (9) at a distance from said face which allows a protrusion which protrudes from said face to remain in contact with said spring (11), when said lid (9) is open, and allows, when the lid (9) is closed, said spring (11) to apply a pressure to the inner container so as to assuredly seal the lower mouth of said inner container against the bottom (1a) of the main container (1), so that when the main container (1) is placed, after closing the lid (9), on a heat source, the liquid in the lower body (5) of the inner container is allowed to generate a pressure which can produce a small yielding of said spring (11), allowing to escape, from the mouth of the lower body (5) of said inner container, part of the liquid contained therein and its rise through said cylindrical interspace (8);
**characterised in that**:
- the inner container is composed of two separate bodies (4, 5), which are stably anchored to each other by their closed bottoms (4a, 5a);
- the medicinal herbs or roots and water are introduced into the lower body (5) of the inner container; and
- the liquid, escaping from the mouth of the lower body (5) of the inner container, rises through the cylindrical interspace (8) until it pours into the upper part of the upper body (4).

2. The apparatus according to claim 1, **characterised in that** the non-stick radiating base (2) is anchored to the bottom (1a) of the outer main container (1) by means of a cap or insert (3), made of steel, which is inserted in a flared opening (2a) of the base (2) and fixed to the central region (1d) of the bottom (1a).

3. The apparatus according to claim 1 or 2, **characterised in that** a handling knob (7) is fixed at the centre of the central partition constituted by the mutually opposite bottoms (4a, 5a) of the two bodies (4, 5) of the inner container.

4. The apparatus according to claim 3, **characterised in that** the handling knob (7) is provided with a thread stem (6) which allows the mutual stable anchoring of the bottoms (4a, 5a) of the two bodies (4, 5).

5. The apparatus according to anyone of the preceding claims 3 and 4, **characterised in that** the handling knob (7) is silver-plated externally.

6. The apparatus according to anyone of the preceding claims, **characterised in that** the spring (11) is a leaf spring.

7. The apparatus according to anyone of the preceding daims, **characterised in that** the mouth (4b) of the upper body (4) is outwardly bent and the upper end of the main container (1) has a flared portion (1b); the outwardly bent mouth (4b) of the upper body (4) being inserted into said flared portion (1b).

8. The apparatus according to anyone of the preceding claims, **characterised in that** the lid (9) consists of a plate-like body provided with three wings (9a, 9b, 9c), arranged at 120° which are folded downward, and with three recesses (12, 12a, 12b) formed peripherally, arranged at 120° to each other and suitable to engage a teeth (13) which protrudes inside the flared portion (1b) of the main container (1); the part (14) of the lid that lies between the wings (9b, 9c) being further curved downward to form protrusions which protrudes from the plane of the lid(9).

9. The apparatus according to anyone of the preceding claims, **characterised in that** a grip handle (10) is fixed to the lid (9); said grip handle (10) being provided with stems (10a, 10b) passing through said lid (9) and supporting the spring (11).

10. The apparatus according to anyone of the preceding claims, **characterised in that** the outer (1) and inner containers are made of a material capable of withstanding a direct heat source up to a temperature of the internal liquid of about 80°C.

11. The apparatus according to anyone of the preceding claims, **characterised in that** the outer (1) and inner containers have polygonal or prism-like shapes.

## Patentansprüche

1. Vorrichtung zum Zubereiten von Aufgüssen aus medizinischen Kräutern und Wurzeln und Kräutertees im allgemeinen, aufweisend:
- Einen äußeren Hauptbehälter (1), der zylindrisch ist und eine Öffnung, einen geschlossen Boden (1a) und eine nicht-haftende Abstrahlbasis (2) zur Platzierung auf einer Direkt-Heizquelle aufweist;
- einen zylindrischen Innenbehälter, der durch zwei zylindrische, untere (5) und obere (4) Körper gebildet ist, in denen die Böden (4a, 5a) einander gegenüberliegen und derart fest verankert sind, dass sie einen einzigen zylindrischen Körper mit zentraler Unterteilung bilden, der Abmessungen derart aufweist, dass er in den äußeren Hauptbehälter (1) mit einem zylindrischen Zwischenraum (8) vorbestimmter Abmessung einführbar ist, um ein Flüssigkeitsableiten durch Hochsteigen bereitzustellen;
- einen Verschlussdeckel (9) mit einer Unterseite, die in die Öffnung des Außenbehälters (1) eingesetzt und auf dieser festgesetzt werden kann;
- zumindest eine Feder (11), die aus Federstahl oder dergleichen hergestellt und parallel zu der Unterseite des Deckels (9) mit einer Distanz von dieser Seite verankert werden kann, wodurch ein Vorsprung bereitgestellt wird, der von dieser Seite vorsteht, um in Kontakt mit der Feder (11) zu verbleiben, wenn der Deckel (9) offen steht, und es erlaubt, wenn der Deckel geschlossen ist, dass die Feder (11) einen Druck auf den Innenbehälter derart ausübt, dass die untere Öffnung des Innenbehälters am Boden (1a) des Hauptbehälters (1) derart sicher abgedichtet zu liegen kommt, dass dann, wenn der Hauptbehälter (1) nach Verschließen des Deckels (9) auf einer Heizquelle angeordnet wird, die Flüssigkeit in dem unteren Körper (5) des Innenbehälters einen Druck erzeugen kann, der ein geringfügiges Nachgeben der Feder (11) hervorruft, wodurch aus der Öffnung des unteren Körpers (5) des Innenbehälters einen Teil der darin enthaltenen Flüssigkeit austreten und durch den zylindrischen Zwischenraum (8) hinaufsteigen kann;
**dadurch gekennzeichnet, dass**
- der Innenbehälter aus zwei getrennten Körpern (4, 5) besteht, die an einander durch ihre geschlossen Böden (4a, 5a) stabil verankert sind;
- die medizinischen Kräuter oder Wurzeln und Wasser in den unteren Körper (5) des Innenbehälters eingeleitet werden; und.
- die Flüssigkeit, die aus der Öffnung des unteren Körpers (5) des Innenbehälters austritt, durch den zylindrischen Zwischenraum (8) hochsteigt, bis sie in den oberen Teil des oberen Körpers (4) strömt.

2. Vorrichtung nach Anspruch 1, **dadurch gekennzeichnet, dass** die nicht-haftende Abstrahlbasis (2) an dem Boden (1a) des äußeren Hauptbehälters (1) durch eine Kappe oder einen Einsatz (3) verankert ist, der aus Stahl hergestellt und in eine trichterförmige erweiterte Öffnung (2a) der Basis (2) eingesetzt und am zentralen Bereich (1d) des Bodens (1a) fixiert ist.

3. Vorrichtung nach Anspruch 1 oder 2, **dadurch gekennzeichnet, dass** ein Handhabungsknopf (7) im Zentrum der zentralen Unterteilung fest angebracht ist, die durch die einander gegenüberliegenden Böden (4a, 5a) der beiden Körper (4, 5) des Innenbehälters gebildet ist.

4. Vorrichtung nach Anspruch 3, **dadurch gekennzeichnet, dass** der Handhabungsknopf (7) mit einem Gewindeschaft (6) versehen ist, der eine gegenseitige stabile Verankerung der Böden (4a, 5a) der beiden Körper (4, 5) ermöglicht.

5. Vorrichtung nach Anspruch 3 oder 4, **dadurch gekennzeichnet, dass** der Handhabungsknopf (7) außen silberplattiert ist.

6. Vorrichtung nach einem der vorangehenden Ansprüche, **dadurch gekennzeichnet, dass** die Feder (11) eine Blattfeder ist.

7. Vorrichtung nach einem der vorangehenden Ansprüche, **dadurch gekennzeichnet, dass** die Öffnung (4b) des oberen Körpers (4) nach außen gebogen verläuft, und dass das obere Ende des Hauptbehälters (1) einen trichterartig aufgeweiteten Abschnitt (1b) aufweist, wobei die auswärts gebogene Öffnung (4b) des oberen Körpers (4) in den trichterförmig aufgeweiteten Abschnitt (1b) eingesetzt ist.

8. Vorrichtung nach einem der vorangehenden Ansprüche, **dadurch gekennzeichnet, dass** der Deckel (9) aus einem plattenartigen Körper besteht, der mit drei Flügeln (9a, 9b, 9c) versehen ist, die mit 120° und abwärts gefaltet angeordnet sind, und mit drei Eintiefungen (12, 12a, 12b), die in Bezug aufeinander mit 120° angeordnet am Rand gebildet und dazu ausgelegt sind, mit einem Zahn (13) in Eingriff zu kommen, der in dem trichterartig erweiterten Abschnitt (1b) des Hauptbehälters (1) vorsteht, wobei derjenige Teil (14) des Deckels, der zwischen den Flügeln (9b, 9c) zu liegen kommt, außerdem abwärts gekrümmt verläuft, um Vorsprünge zu bilden, die aus der Ebene des Deckels (9) vorstehen.

9. Vorrichtung nach einem der vorangehenden Ansprüche, **dadurch gekennzeichnet, dass** ein Handgriff (10) am Deckel (9) befestigt ist, wobei der Handgriff (10) mit Stielen (10a, 10b) versehen ist, die den Deckel (9) durchsetzen und die Feder (11) tragen.

10. Vorrichtung nach einem der vorangehenden Ansprüche, **dadurch gekennzeichnet, dass** die äußeren (1) und inneren Behälter aus einem Material hergestellt sind, dass eine Direkt-Heizquelle bis hin zu einer Temperatur der internen Flüssigkeit von etwa 80°C widerstehen kann.

11. Vorrichtung nach einem der vorangehenden Ansprüche, **dadurch gekennzeichnet, dass** die äußeren (1) und inneren Behälter mehreckige oder prismaartige Formen aufweisen.

## Revendications

1. Dispositif pour préparer des infusions de plantes et racines médicinales et des tisanes en général, comprenant :
- un conteneur principal extérieur (1) qui est cylindrique, comporte une ouverture, un fond fermé (1a) et une base radiante non adhérente (2), à placer sur une source de chaleur directe ;
- un conteneur intérieur cylindrique, constitué par deux corps cylindriques inférieur (5) et supérieur (4), dans lesquels les fonds (4a, 5a) sont mutuellement opposés et sont fermement ancrés de façon à constituer un seul corps cylindrique avec une division centrale et ayant des dimensions telles de façon à permettre son insertion dans ledit conteneur principal extérieur (1) avec un espacement cylindrique (8) de dimension préréglée pour fournir une mise à l'air libre du liquide en montant ;
- un couvercle de fermeture (9), ayant une face sous-jacente, qui peut être inséré dans l'ouverture dudit conteneur principal extérieur (1) peut être verrouillé sur celui-ci ;
- au moins un ressort (11) fait en acier à ressorts ou analogue, qui est ancré parallèlement à la face sous-jacente dudit couvercle (9) à distance de ladite face, ce qui permet à une protubérance qui dépasse de ladite face de rester en contact avec ledit ressort (11) lorsque ledit couvercle (9) est ouvert et permet audit ressort (11), lorsque le couvercle (9) est fermé, d'appliquer une pression au conteneur intérieur de façon à fermer hermétiquement assurément l'ouverture inférieure dudit conteneur intérieur contre le fond (1a) du conteneur principal (1), de sorte que lorsque le conteneur principal (1) est placé, après fermeture du couvercle (9), sur une source de chaleur, le liquide dans le corps inférieur (5) du conteneur intérieur est autorisé à générer une pression qui peut produire un petit fléchissement dudit ressort (11), permettant l'échappement, de l'ouverture du corps inférieur (5) dudit conteneur intérieur, d'une partie du liquide qui y est contenu et sa montée à travers ledit espacement cylindrique (8) ;
**caractérisé en ce que** :
- le conteneur intérieur est composé de deux corps séparés (4, 5) , qui sont mutuellement ancrés de manière stable par leurs fonds fermés (4a, 5a) ;
- les herbes ou racines médicinales et l'eau sont introduites dans le corps inférieur (5) du conteneur intérieur ; et
- le liquide qui s'échappe de l'ouverture du corps inférieur (5) du conteneur intérieur monte à travers l'espacement cylindrique (8) jusqu'à ce qu'il coule dans la partie supérieure du corps supérieur (4).

2. Dispositif selon la revendication 1, **caractérisé en ce que** la base radiante non adhérente (2) est ancrée au fond (1a) du conteneur principal extérieur (1) au moyen d'une garniture ou d'une pièce rapportée (3), faite en acier, qui est insérée dans une ouverture évasée (2a) de la base (2) et fixée à la région centrale (1d) du fond (1a).

3. Dispositif selon la revendication 1 ou 2, **caractérisé en ce qu'**un bouton de manipulation (7) est fixé au centre de la division centrale constituée par les fonds mutuellement opposés (4a, 5a) des deux corps (4, 5) du conteneur intérieur.

4. Dispositif selon la revendication 3, **caractérisé en ce que** le bouton de manipulation (7) est pourvu d'une tige filetée (6) qui permet l'ancrage mutuel stable des fonds (4a, 5a) des deux corps (4, 5).

5. Dispositif selon l'une quelconque des revendications 3 et 4, **caractérisé en ce que** le bouton de manipulation (7) est plaqué à l'argent à l'extérieur.

6. Dispositif selon l'une quelconque des revendications précédentes, **caractérisé en ce que** le ressort (11) est un ressort à lame.

7. Dispositif selon l'une quelconque des revendications précédentes, **caractérisé en ce que** l'ouverture (4b) du corps supérieur (4) est courbée vers l'extérieur et l'extrémité supérieure du conteneur principal (1) comporte une partie évasée (1b), l'ouverture courbée vers l'extérieur (4b) du corps supérieur (4) étant insérée dans ladite partie évasée (1b).

8. Dispositif selon l'une quelconque des revendications précédentes, **caractérisé en ce que** le couvercle (9) consiste en un corps de type plaque pourvu de trois ailes (9a, 9b, 9c) disposées à 120° qui sont pliées vers le bas et de trois évidements (12, 12a, 12b), formés de manière périphérique, disposés à 120° mutuellement et aptes à engager une dent (13) qui dépasse à l'intérieur de la partie évasée (1b) du conteneur principal (1), la partie (14) du couvercle qui est placée entre les ailes (9b, 9c) étant en outre courbée vers le bas pour constituer des protubérances qui dépassent du plan du couvercle (9).

9. Dispositif selon l'une quelconque des revendications précédentes, **caractérisé en ce qu'**une poignée de saisie (10) est fixée au couvercle (9), ladite poignée de saisie (10) étant proposée avec des tiges (10a, 10b) passant à travers ledit couvercle (9) et supportant le ressort (11).

10. Dispositif selon l'une quelconque des revendications précédentes, **caractérisé en ce que** les conteneurs extérieur (1) et intérieur sont faits dans un matériau apte à résister à une source de chaleur directe jusqu'à une température du liquide interne d'environ 80° C.

11. Dispositif selon l'une quelconque des revendications précédentes, **caractérisé en ce que** les conteneurs extérieur (1) et intérieur ont des formes polygonales ou de type prismatique.
